# EUROPEAN PATENT APPLICATION

(11) **EP 4 113 694 A1**
(43) Date of publication of application: **04.01.2023**
(21) Application number: 21182503.9
(22) Date of filing: 29.06.2021
(51) Int. Cl.: H01M 10/42, H01M 50/204, H01M 50/572, H01M 50/249, A62C 3/07

(54) **A BATTERY SYSTEM AND A METHOD FOR AVOIDING GAS BURNS IN A BATTERY SYSTEM**

(71) Applicant: Samsung SDI Co., Ltd., Yongin-si, Gyeonggi-do 17084 (KR)
(72) Inventor: Golubkov, Andrej, 8010 Graz (AT)
(74) Representative: Gulde & Partner

(57) **Abstract**

According to one aspect of the present invention, a battery system is provided, wherein the battery system comprises a battery pack including a housing and a plurality of battery cells accommodated within the housing, an inert gas generation unit configured to provide an inert gas and to flush the housing with the inert gas, and a battery management system configured to detect an abnormal condition that could cause the occurrence of a thermal runaway of the battery pack and further configured to activate the inert gas generation unit when the abnormal condition is detected by the battery management system.

## Description

### Field of the Disclosure

The present disclosure relates to a battery system and a method for avoiding gas burns in a battery system. The present disclosure further refers to an electric vehicle comprising the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries comprise an electrode assembly including a positive electrode, a negative electrode, and a separator interposed between the positive and negative electrodes, a case receiving the electrode assembly, and electrode terminals electrically connected to the electrodes of the electrode assembly. An electrolyte solution is injected into the case in order to enable charging and discharging. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for electric motor propulsion of vehicles. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure an arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules and the interconnects, which provide electrical conductivity between them.

A battery system further includes a battery management system (BMS), which is any electronic system that manages the rechargeable battery cells, battery modules and battery pack, such as by protecting the battery cells from operating outside their safe operating area, monitoring their states, calculating secondary data, reporting that data, controlling its environment, authenticating it and/or balancing it. For example, the BMS may monitor the state of the battery pack, battery modules or battery cells as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

Specifically, the BMS shall take necessary actions when a cell failure is detected. For example, an electrolyte breakdown may have the consequence that a flammable gas is released. The BMS may then activate a circuit interrupt device (CID), which initiates a current shut down. In case of cathode breakdown, oxygen is released and the BMS may open a pressure vent.

However, oxidation of cell components may lead to a so-called thermal runaway, where BMS action is usually too late and cell destruction results. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack. Therefore, the battery pack housing usually includes venting assemblies to prevent excessive overpressure. The venting assembly (e.g. burst plate) opens and releases the gas mixture to the ambient.

At the beginning of cell venting - as long as the vented gas has not displaced all air to the outside through the venting assembly - a burnable gas mixture exists inside the battery pack housing. If all air is displaced by the hot vented gas deflagration is not possible. But if the vent-gas inside the pack cools down and air is sucked again into the pack-housing from the ambient a burnable gas mixture may be formed again.

As long as a burnable fuel-air mixture exists inside the battery housing a deflagration may occur. A deflagration causes a high-pressure spike which may damage the battery casing. A damaged battery casing allows air access to the hot components inside the damaged pack. The hot components may ignite eventually resulting in a complete battery fire.

It is an object of the present disclosure to overcome or reduce at least some of the drawbacks of the prior art and to provide a battery system that reduces or possibly eliminates risks associated a production of flammable gas compositions inside the battery pack.

### Summary of Invention

The invention is defined by the appended claims. The description that follows is subjected to this limitation.

According to one aspect of the present disclosure, a battery system is provided, wherein the battery system comprises a battery pack including a housing and a plurality of battery cells accommodated within the housing, an inert gas generation unit configured to provide an inert gas and to flush the housing with the inert gas, and a battery management system configured to detect an abnormal condition that could cause the occurrence of a thermal runaway of the battery pack and further configured to activate the inert gas generation unit when the abnormal condition is detected by the battery management system.

According to another aspect of the present disclosure, a vehicle including a battery module as afore-mentioned is provided.

According to another aspect of the present disclosure, a method for avoiding gas burns in a battery system is provided, wherein the method comprises the steps of a) providing a battery system comprising a battery pack including a housing and a plurality of battery cells accommodated within the housing; an inert gas generation unit configured to generate an inert gas and to flush the housing with the inert gas; and a battery management system configured to detect an abnormal condition that could cause the occurrence of a thermal runaway of the battery pack and further configured to activate the inert gas generation unit when the abnormal condition is detected by the battery management system; b) detecting the abnormal condition and generating a first activation signal by the battery management system, transmitting the first activation signal to the inert gas generation unit by the battery management system; and c) producing the inert gas by the inert gas generation unit after receipt of the first activation signal of the battery management system and flushing the housing with the inert gas.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 is a top view illustrating a battery system according to a first embodiment of the present disclosure.
Fig. 2 is a top view illustrating a battery system according to a second embodiment of the present disclosure.
Fig. 3 is a flow chart illustrating a method for avoiding gas burns in the battery systems of the first and second embodiments.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure".

The electronic or electric devices and/or any other relevant devices or components according to embodiments of the present disclosure described herein may be implemented utilizing any suitable hardware, firmware (e.g. an application-specific integrated circuit), software, or a combination of software, firmware and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallization and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, an improved battery system is provided. The battery system comprises a battery pack including a housing and a plurality of battery cells accommodated within the housing. The battery system further comprises an inert gas generation unit configured to provide an inert gas and to flush the housing with the inert gas. The battery system also comprises a battery management system, BMS, configured to detect an abnormal condition that could cause the occurrence of a thermal runaway of the battery pack and further configured to activate the inert gas generation unit when the abnormal condition is detected by the BMS.

In other words, the battery system includes an inert gas generation unit, which is activated when the BMS detects a condition, which may likely lead to a thermal runaway. In response to an activation signal of the BMS, the inert gas generation unit will immediately (i.e. within few seconds, in particular less than 2 seconds) flush the battery pack housing with an inert gas. The inert gas is produced by the inert gas generation unit. The inert gas is floated into the housing of the battery pack and displaces the gas mixture located there. At the same time, the BMS may open a pressure vent of vent assembly for releasing the gas mixture. Therefore, even before the situation gets out of control, i.e. a thermal runway has started, the BMS initiates the inert gas generation unit to flush the battery pack housing with inert gas. This measure may, on the one hand, reduce the risk of a thermal runaway occurring since flammable gas mixtures are diluted, displaced and released. On the other hand, a thermal runaway can possibly still be restrained and an expansion of the highly exothermic process to neighboring battery cells or battery modules may be avoided.

An inert gas in the sense of the present disclosure is a gaseous compound which does not itself react with compounds being present in combustions processes. Specifically, the inert gas does not react with oxygen or flammable gases being present in the battery pack during or prior to a thermal runaway. Suitable inert gases may include for example nitrogen, carbon dioxide and argon.

The inert gas generation unit is configured to flush the inert gas into the housing of the battery pack. If the inert gas generation unit is assembled inside the battery pack housing, the inert gas may be simply blown into the housing interior. If the inert gas generation unit is assembled closed to the battery pack housing, the inert gas generation unit will include guiding elements for the generated inert gas, such as guiding plates or tubes reaching into the interior of the housing.

According to one embodiment, the inert gas generation unit may include a first inert gas generator configured to be activated when the abnormal condition is detected and to generate the inert gas and to flush the housing with the inert gas. Generally, a gas generator is a device for generating gas. A gas generator may create gas by a chemical reaction or from a solid or liquid source, when storing a pressurized gas is undesirable or impractical. The first inert gas generator generates an inert gas, preferably by a chemical reaction. For example, automobile airbags use sodium azide for inflation. A small pyrotechnic charge triggers its decomposition, producing nitrogen gas, which inflates the airbag in milliseconds. Similar gas generators are used for fire suppression. Hence, the first inert gas generator may also generate the inert gas, i.e. nitrogen, from exothermically decomposition of sodium azide.

According to another embodiment, which may also include the before-mentioned first inert gas generator, the BMS may be further configured to detect a thermal runaway and to activate the inert gas generation unit, when the BMS has detected the thermal runaway. Thus, the inert gas generation unit may be activated a second time and will a second time flush inert gas into the interior of the housing. This measure may not only suppress a rapid expansion of the location of thermal runaway but will also prevent the battery system from sucking in fresh air from an ambient of the battery system.

The inert gas generation unit may especially comprise a second inert gas generator configured to be activated when the thermal runaway is detected and to generate the inert gas and to flush the housing with the inert gas. The battery system may thus include at least two inert gas generators, which are activated at different operating conditions detected by the BMS. For example, the first inert gas generator will be activated when an abnormal condition is detected which may lead to a thermal runaway. If nevertheless the thermal runway is occurred or even if no abnormal condition was detected and the first inert gas generator has not been activated, at least the second inert gas generator will flush the housing with inert gas.

The first inert gas generator and/or the second inert gas generator may be pyrotechnical inert gas generators. As already mentioned above, a pyrotechnic charge triggers the decomposition of inert gas generating compounds, such as azides, in particular sodium azides. Pyrotechnical inert gas generators have very short response time, i.e. inert gas generation starts nearly immediately after receipt of the BMS activation signal.

Specifically, the first gas generator may be configured to perform gas generation between 0.1 to 5 seconds. This will be usually sufficient to fully float the battery pack housing of electric vehicles, i.e. the housing is flushed completely with the inert gas. The second gas generator may be configured to perform gas generation within 0.1 to 20 seconds. Inert gas generation could thus be sustained over a slightly longer period of time to avoid reignition in case of a thermal runaway. The amount of inert gas, which shall be produced by the inert gas generation unit, depends on the free volume of the housing and needs to be adapted to the specific embodiment. Generally spoken, the volume of the inert gas may dilute the gas composition within the housing such that exothermic combustion is inhibited, respectively flammable or explosive gas mixtures are floated out of the housing.

The abnormal condition that could cause the occurrence of a thermal runaway, may be indicated

The detection of an abnormal condition may include (i) BMS subroutines for calculation of the likelihood of occurrence of a thermal runaway and/or (ii) controlling of at least one parameter of the battery system. For example, the following events may indicate an abnormal condition:
- exceeding a temperature limit inside the housing or at the surface of battery cells;
- detection of a crash;
- detection of an abnormal voltage of one or more battery cells;
- detection of over-current of the battery pack; and
- detection of an abnormal gas-compositions within the housing.

Suitable parameters for determination of abnormal conditions depend on the specific configuration of the battery system and need to be adapted for a specific application. For example, a battery cell temperature may be measured directly at the surface of a battery cell case. If the temperature exceeds, for example, 100°C, the BMS will activate the inert gas generation unit. Or a crash sensor may detect a crash of a vehicle containing the battery system with another object. The detected crash may cause the BMS to activate the inert gas generation unit. Also, a detected abnormal voltage of battery cells or over-current of the battery pack may initialize the BMS to activate the inert gas generation unit. Further, gas sensors within the housing of the battery pack may detect abnormal gas-composition indicating damage of a battery cell.

Besides controlling one or more of the specified parameters, the BMS may include in alternative or in addition an algorithm for determination of a state of safety, SOS (see for example E. Cabrera-Castillo et al., Journal of Power Sources, volume 324, pages 509-520). SOS may calculate likelihood levels for a failure of the battery system. Thus, exceeding a given likelihood level may indicate an abnormal condition and, as a consequence, the BMS may set a first activation signal for the inert gas generation unit. In other words, the BMS is configured to control the activity of the inert gas generation unit by using the SOS subroutine. Other subroutines for indicating the likelihood of occurrence of a thermal runaway (i.e. an abnormal condition) may also be implemented into the BMS. Most general, the BMS is configured to detect an abnormal condition which may lead to a thermal runaway.

In the very same manner, the detection of a thermal runaway may include (i) BMS subroutines for calculation of a thermal runaway and/or (ii) controlling of at least one parameter of the battery system. For example, the following events may indicate a thermal runaway:
- exceeding a temperature limit inside the housing or at the surface of battery cells; and
- detection of an abnormal gas-composition within the housing.

Besides these parameters, the BMS may also include subroutines for indicating of the thermal runaway. Most general, the BMS is configured to detect a thermal runaway.

Furthermore, the battery pack may be gas tight, preferably with an exception for a filter which allows a gas exchange to an environment to compensate a pressure change due to a temperature change or an altitude change.

An advantage the present battery system is that a venting of flammable gas mixtures in case of a cell failure may be performed in a more controlled way, preventing or at least diminishing damage to a part of the battery system or the battery system as a whole or to nearby humans.

According to another aspect of the present disclosure, a vehicle, in particular an electric vehicle includes the battery system as describes in any afore-mentioned embodiments. An advantage of such a vehicle is that the safety of the driver and of passengers is improved. Furthermore, a damage of the vehicle caused by a thermal runaway of the battery system is reduced.

According to another aspect of the present disclosure, a method for avoiding gas burns in a battery system is provided, wherein the method comprises the steps of
a) providing a battery system comprising
   a battery pack including a housing and a plurality of battery cells accommodated within the housing;
   an inert gas generation unit configured to generate an inert gas and to flush the housing with the inert gas; and
   a battery management system, BMS, configured to detect an abnormal condition that could cause the occurrence of a thermal runaway of the battery pack and further configured to activate the inert gas generation unit when the abnormal condition is detected by the BMS;
b) detecting the abnormal condition and generating a first activation signal by the BMS, transmitting the first activation signal to the inert gas generation unit by the BMS; and
c) producing the inert gas by the inert gas generation unit after receipt of the first activation signal of the BMS and flushing the housing with the inert gas.

Further details of the battery system including the inert gas generation unit are provided above.

The inert gas generation unit may include a first inert gas generator configured to be activated when the abnormal condition is detected and to generate the inert gas, and wherein in step c) the first inert gas generator may produce the inert gas and flushes the housing with the inert gas in response to the first activation signal of the BMS.

The BMS may further be configured to also detect a thermal runaway and to activate the inert gas generation unit, when the BMS has detected the thermal runaway. The method may therefore further include the steps of
d) detecting the thermal runaway and generating a second activation signal by the BMS, transmitting the second activation signal to the inert gas generation unit by the BMS; and
e) producing the inert gas by the inert gas generation unit after receipt of the second activation signal of the BMS and flushing the housing with the inert gas.

The inert gas generation unit may include a second inert gas generator configured to be activated when the thermal runaway is detected and to generate the inert gas, and wherein in step e) the second inert gas generator may produce the inert gas and flushes the housing with the inert gas in response to the second activation signal of the BMS.

In step b), the abnormal condition that could cause the occurrence of a thermal runaway may be determined by (i) BMS subroutines for calculation of the likelihood of occurrence of a thermal runaway and/or (ii) controlling selected parameters of the battery system. Exemplary subroutines of the BMS and suitable parameters for the determination are already described above.

In step d), the detection of a thermal runaway may be determined by (i) BMS subroutines for calculation of a thermal runaway and/or (ii) controlling selected parameters of the battery system. Exemplary subroutines of the BMS and suitable parameters for the determination are already described above.

### Specific Embodiments

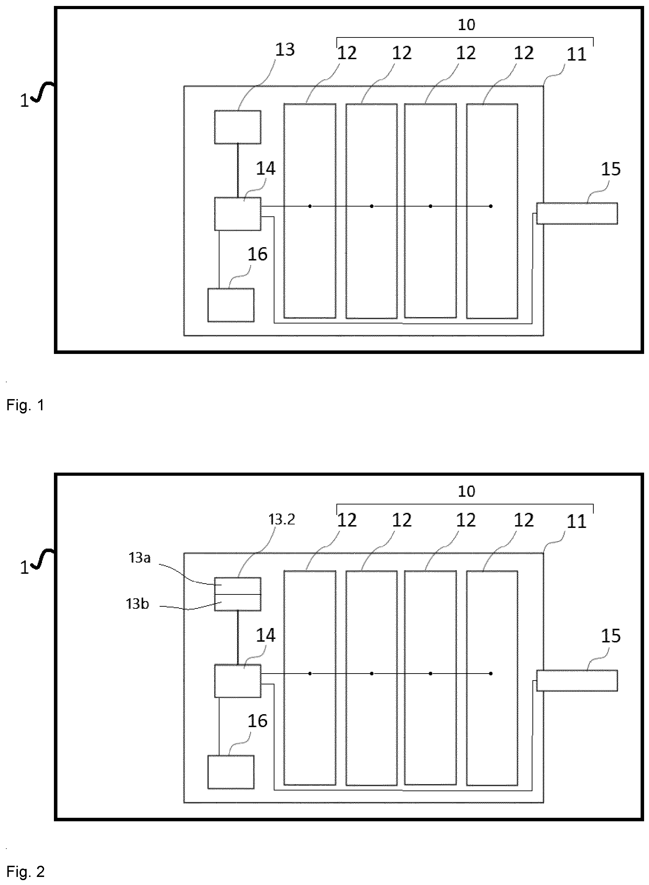

As a first exemplary embodiment, Figure 1 shows a battery system 1 comprising a battery pack 10 including a housing 11 and a plurality of battery modules 12 accommodated within the housing 11. The battery system 1 may form, for example, a part of the propulsion components of an electric vehicle. Each of the battery modules 12 includes a plurality of battery cells coupled in series and/or in parallel so as to provide a high energy content for motor driving of the vehicle. That is, each battery module 12 is formed by interconnecting the electrode terminals of the plurality of unit battery cells depending on a required amount of power and in order to realize a high-power rechargeable battery pack 10. Furthermore, the battery modules 12 can be constructed either in block design or in modular design. For reasons of clarity and because these details are not important for the understanding of present disclosure, high-voltage lines of the battery modules 12, single battery cells and other high-voltage components of the battery pack 10 are not illustrated in the drawing.

The battery system 1 further includes a battery management system, BMS, 14. According to the exemplary embodiment, the BMS 14 is centralized such that a single controller is connected to the battery cells of the battery modules 12 through a multitude of wires (Figure 1 illustrates schematically signal lines from the BMS 14 to the battery modules 12). Here, the BMS 14 is assembled within the housing 11 of the battery pack 10, but may also be positioned outside the housing 11.

The BMS 14 is any electronic system that manages the rechargeable batteries and the battery modules 12, such as by protecting the batteries from operating outside their safe operating area, monitoring their states, calculating secondary data, reporting that data, controlling its environment, authenticating it and/or balancing it. For example, the BMS 14 may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, the BMS 14 may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage). For simplifying the function of the BMS 14, the exemplary embodiment shows only a single temperature sensor 16, which measures a temperature within the housing 11 and provides measurement data to the BMS 14. However, other sensed parameters or calculated values may also be suitable for determination of the occurrence of a thermal runaway or the thermal runaway itself.

Further, an inert gas generation unit 13 is assembled within the housing 11 of the battery pack 10. The inert gas generation unit 13 is configured to generate an inert gas and to flush the housing 11 with the inert gas. According to the exemplary embodiment, the inert gas generation unit 13 is connected to the BMS 14 via a signal line. The inert gas generation unit 13 may include or even consist of a pyrotechnical inert gas generator, which generates an inert gas by a chemical reaction. For example, the inert gas generator may generate nitrogen as the inert gas from exothermically decomposition of sodium azide.

Figure 1 furthermore shows a venting assembly 15, which could be also be controlled by the BMS 14. Such a venting assembly 15 may include switchable valves and filter systems. In predefined operating conditions of the battery system 1, the BMS 14 may open the switchable valves of the venting assembly 15 to release a gas mixture from the interior of the housing 11.

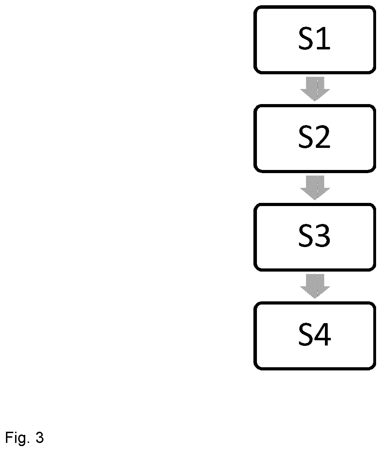

The BMS 14 is configured to detect an abnormal condition that could cause the occurrence of a thermal runaway of the battery pack 10 and is further configured to activate the inert gas generation unit 13 when the abnormal condition is detected by the BMS 14. The process will be described in detail below with respect to steps S1 and S2 of the flow chart of Figure 3.

Figure 2 shows a battery system 1 according to a second embodiment of the present disclosure. Basically, the second embodiment is similar to the first embodiment illustrated in Fig. 1 except that an inert gas generation unit 13.2 includes a first inert gas generator 13a and a second inert gas generator 13b, which will be described in more detail below. As to the remaining features of the battery system of Figure 2, it is referred to the description of the first embodiment above.

The first inert gas generator 13a of the inert gas generation unit 13.2 of the second embodiment may be a pyrotechnical inert gas generator, which generates an inert gas by a chemical reaction. For example, the first inert gas generator 13a may generate nitrogen as the inert gas from exothermically decomposition of sodium azide. The first inert gas generator 13a is initiated to generate inert gas by the BMS 14, when the BMS 14 detects an abnormal condition that could cause the occurrence of a thermal runaway of the battery pack 10.

The second inert gas generator 13b of the inert gas generation unit 13.2 of the second embodiment may also be a pyrotechnical inert gas generator, which generates an inert gas by a chemical reaction. For example, the second inert gas generator 13b may generate nitrogen as the inert gas from exothermically decomposition of sodium azide. The second inert gas generator 13b is initiated to generate inert gas by the BMS 14, when the BMS 14 detects a thermal runaway of the battery pack 10. Thus, the BMS 14 is further configured to detect a thermal runaway of the battery pack 10 and configured to activate the second inert gas generator 13b when the abnormal condition is detected by the BMS 14. To most effective fight a thermal runaway the inert gas generation should be uphold for some seconds, for example up to 20 seconds.

Figure 3 is a flow chart illustrating an exemplary process for avoiding gas burns in a battery system such as the first and second embodiments illustrated in Figures 1 and 2. The battery system of the first embodiment only includes an inert gas generation unit 13 with a single pyrotechnical gas generator and thus only further below described steps S1 and S2 of the process could be performed, whereas the second embodiment includes an inert gas generation unit 13.2 with a first pyrotechnical gas generator 13a and a second pyrotechnical gas generator 13b. In the following, the exemplary process will therefore be explained with respect to only the second embodiment illustrated in Figure 2.

In step S1, the BMS 14 detects an abnormal condition and generates a first activation signal which is transmitted to the inert gas generation unit 13.2. In more detail and according to the exemplary embodiment of Figure 2, temperature sensor 16 measures a temperature of the gas mixture being present in the housing 11. The measured temperature (in the following also denoted as housing temperature) is an input signal of the BMS 14. According to an exemplary subroutine implemented in the controller of the BMS 14, the housing temperature is continuously supervised. If the housing temperature exceeds a given temperature limit, for example 90°C, the likeliness of occurrence of a thermal runaway is increased significantly. Accordingly, the subroutine generates the first activation signal for the inert gas generation unit 13.2.

It has to be noted that supervision of the housing temperature is only one exemplary option to determine an abnormal condition which may lead to a thermal runaway. As mentioned above under section "General Concept" several other sensed parameters or calculated key parameters of the battery system may be used for determination of abnormal conditions. The choice of parameters depends on the design of the battery system and its operating conditions and should be adapted to each specific application.

In step S2, the inert gas generation unit 13.2 receives the first activation signal of the BMS 14 and subsequently activates the first inert gas generator 13a. When the first inert gas generator 13a of the second embodiment is a pyrotechnical gas generator, inert gas generation will start within only a few milliseconds and flush the housing 11 completely. Flammable gases which may be vented by a battery cell shortly before thermal runaway occurs, may be displaced and diluted by the generated inert gas and thereby ignition of the gas mixture may be avoided. Preferable, the BMS 14 simultaneous sends an activation signal to the venting assembly 15 for temporarily opening switchable valves and assuring safe release of the gas mixture from the interior of the housing 11.

Simultaneous with or subsequent to step S2, the battery system 1 may provide a maintenance note to the driver of the vehicle that the battery pack 10 must be checked and serviced in a qualified repair station.

In step S3, if the measures from step 2 were not successful, the BMS 14 of the battery system 1 may detect a thermal runaway. For example, the temperature sensor 16 may measure a further increase of the housing temperature. A second subroutine implemented in the controller of the BMS 14, still continuously supervises the housing temperature. If the housing temperature exceeds a given (second) temperature limit, for example 120°C, the thermal runaway is considered to be detected. Accordingly, the second subroutine generates a second activation signal for the inert gas generation unit 13.2.

Again, it has to be noted that supervision of the housing temperature is only one exemplary option to determine a thermal runaway. As mentioned above under section "General Concept" several other sensed parameters or calculated key parameters of the battery system may be used for determination of a thermal runaway. The choice of parameters depends on the design of the battery system and its operating conditions and should be adapted to each specific application.

In step S4, the inert gas generation unit 13.2 receives the second activation signal of the BMS 14 and subsequently activates the second inert gas generator 13b. When the second inert gas generator 13b of the second embodiment is a pyrotechnical gas generator, inert gas generation will start within only a few milliseconds and flush the housing 11 completely. During the thermal runaway, flammable gases are vented by the damaged battery cell and burn inside the housing 11. The generated inert gas will flush the housing 11, extinguish the fire, and displace and dilute the flammable gas mixture such that reignition of the gas mixture may be avoided. Preferable, the BMS 14 simultaneous sends an activation signal to the venting assembly 15 for temporarily opening switchable valves and assuring safe release of the gas mixture from the interior of the housing 11. For avoiding the battery pack 10 sucking air form the outside which may reignite the gas mixture in the housing 11 (in case of a thermal runaway the damaged battery cells may still vent flammable gases), the second gas generator 13b preferable generates inert gas for a longer period then the first gas generator 13a, for example for 10 seconds.

Simultaneous with or subsequent to step S4, the battery system 1 may provide a maintenance note to the driver of the vehicle that the battery pack 10 must be checked and serviced in a qualified repair station.

### Reference signs

- 1: battery system
- 10: battery pack
- 11: housing
- 12: battery modules
- 13, 13.2: inert gas generation units
- 13a: first gas generator
- 13b: second gas generator
- 14: battery management system
- 15: venting assembly
- 16: temperature sensor

## Claims

1. A battery system (1), comprising:
- a battery pack (10) including a housing (11) and a plurality of battery cells accommodated within the housing (11);
- an inert gas generation unit (13, 13.2) configured to provide an inert gas and to flush the housing (11) with the inert gas; and
- a battery management system, BMS, (14) configured to detect an abnormal condition that could cause the occurrence of a thermal runaway of the battery pack (10) and further configured to activate the inert gas generation unit (13, 13.2) when the abnormal condition is detected by the battery management system (14).

2. The battery system according to claim 1, wherein the BMS (14) is further configured to detect a thermal runaway and to activate the inert gas generation unit (13.2), when the BMS (14) has detected the thermal runaway.

3. The battery system according to claim 1 or 2, wherein the inert gas generation unit (13, 13.2) includes a first inert gas generator (13a) configured to be activated when the abnormal condition is detected and to generate the inert gas and to flush the housing (11) with the inert gas.

4. The battery system of claim 2, wherein the inert gas generation unit (13.2) comprises a second inert gas generator (13b) configured to be activated when the thermal runaway is detected and to generate the inert gas and to flush the housing (11) with the inert gas.

5. The battery system according to claim 3 or 4, wherein the first inert gas generator (13a) and/or the second inert gas generator (13b) are pyrotechnical inert gas generators.

6. An electric vehicle comprising the battery system according to any of the preceding claims.

7. A method for avoiding gas burns in a battery system (1), wherein the method comprises the steps of:
a) providing a battery system (1) comprising:
- a battery pack (10) including a housing (11) and a plurality of battery cells accommodated within the housing (11);
- an inert gas generation unit (13, 13.2) configured to generate an inert gas and to flush the housing (11) with the inert gas; and
- a battery management system, BMS, (14) configured to detect an abnormal condition that could cause the occurrence of a thermal runaway of the battery pack (10) and further configured to activate the inert gas generation unit (13) when the abnormal condition is detected by the BMS (14);
b) detecting the abnormal condition and generating a first activation signal by the BMS (14), transmitting the first activation signal to the inert gas generation unit (13, 13.2) by the BMS (14); and
c) producing the inert gas by the inert gas generation unit (13, 13.2) after receipt of the first activation signal of the BMS (14) and flushing the housing (11) with the inert gas.

8. The method according to claim 7, wherein the BMS (14) is further configured to detect a thermal runaway and to activate the inert gas generation unit (13.2), when the BMS (14) has detected the thermal runaway, the method further includes the steps of:
d) detecting the thermal runaway and generating a second activation signal by the BMS (14), transmitting the second activation signal to the inert gas generation unit (13.2) by the BMS (14); and
e) producing the inert gas by the inert gas generation unit (13,2) after receipt of the second activation signal of the BMS (14) and flushing the housing (11) with the inert gas.

9. The method according to claim 7, wherein the inert gas generation unit (13, 13.2) includes a first inert gas generator (13a) configured to be activated when the abnormal condition is detected and to generate the inert gas, and
wherein in step c) the first inert gas generator (13a) produces the inert gas and flushes the housing (11) with the inert gas in response to the first activation signal of the BMS (14).

10. The method according to claim 8, wherein the inert gas generation unit (13.2) includes a second inert gas generator (13b) configured to be activated when the thermal runaway is detected and to generate the inert gas, and
wherein in step e) the second inert gas generator (13b) produces the inert gas and flushes the housing (11) with the inert gas in response to the second activation signal of the BMS (14).

11. The method according to claim 7, wherein in step b) the abnormal condition that could cause the occurrence of a thermal runaway is determined by (i) BMS subroutines for calculation of the likelihood of occurrence of a thermal runaway and/or (ii) controlling selected parameters of the battery system (1).

12. The method according to claim 8, wherein in step d) the detection of a thermal runaway is determined by (i) BMS subroutines for calculation of a thermal runaway and/or (ii) controlling selected parameters of the battery system (1).

## Amended claims

### Amended claims in accordance with Rule 137(2) EPC.

1. A battery system (1), comprising:
- a battery pack (10) including a housing (11) and a plurality of battery cells accommodated within the housing (11);
- an inert gas generation unit (13.2) configured to provide an inert gas and to flush the housing (11) with the inert gas;
- a battery management system, BMS, (14) configured to detect an abnormal condition that could cause the occurrence of a thermal runaway of the battery pack (10) and to activate the inert gas generation unit (13.2) when the abnormal condition is detected by the battery management system (14), and further configured to detect a thermal runaway and to activate the inert gas generation unit (13.2) when the BMS (14) has detected the thermal runaway; and
- a temperature sensor (16) configured to measure within the housing (11) and provide measurement data to the BMS (14) for detecting the thermal runaway,
wherein the inert gas generation unit (13.2) comprises:
a first inert gas generator (13a) configured to be activated when the abnormal condition is detected and to generate the inert gas and to flush the housing (11) with the inert gas, and
a second inert gas generator (13b) configured to be activated when the thermal runaway is detected and to generate the inert gas and to flush the housing (11) with the inert gas.

2. The battery system according to claim 1, wherein the first inert gas generator (13a) and/or the second inert gas generator (13b) are pyrotechnical inert gas generators.

3. An electric vehicle comprising the battery system according to any of the preceding claims.

4. A method for avoiding gas burns in a battery system (1), wherein the method comprises the steps of:
a) providing a battery system (1) comprising:
- a battery pack (10) including a housing (11) and a plurality of battery cells accommodated within the housing (11);
- an inert gas generation unit (13.2) configured to generate an inert gas and to flush the housing (11) with the inert gas; and
- a battery management system, BMS, (14) configured to detect an abnormal condition that could cause the occurrence of a thermal runaway of the battery pack (10) and to activate the inert gas generation unit (13) when the abnormal condition is detected by the BMS (14), and further configured to detect a thermal runaway and to activate the inert gas generation unit (13.2) when the BMS (14) has detected the thermal runaway;
- a temperature sensor (16) configured to measure a temperature within the housing (11) and provide measurement data to the battery management system (14) for detecting the thermal runaway;
b) detecting the abnormal condition and generating a first activation signal by the BMS (14), transmitting the first activation signal to the inert gas generation unit (13.2) by the BMS (14);
c) producing the inert gas by the inert gas generation unit (13.2) after receipt of the first activation signal of the BMS (14) and flushing the housing (11) with the inert gas;
d) detecting the thermal runaway and generating a second activation signal by the BMS (14), transmitting the second activation signal to the inert gas generation unit (13.2) by the BMS (14); and
e) producing the inert gas by the inert gas generation unit (13.2) after receipt of the second activation signal of the BMS (14) and flushing the housing (11) with the inert gas.

5. The method according to claim 4, wherein the inert gas generation unit (13.2) includes a first inert gas generator (13a) configured to be activated when the abnormal condition is detected and to generate the inert gas, and a second inert gas generator (13b) configured to be activated when the thermal runaway is detected and to generate the inert gas; and
wherein in step c) the first inert gas generator (13a) produces the inert gas and flushes the housing (11) with the inert gas in response to the first activation signal of the BMS (14), and
wherein in step e) the second inert gas generator (13b) produces the inert gas and flushes the housing (11) with the inert gas in response to the second activation signal of the BMS (14).

6. The method according to claim 4, wherein in step b) the abnormal condition that could cause the occurrence of a thermal runaway is determined by (i) BMS subroutines for calculation of the likelihood of occurrence of a thermal runaway and/or (ii) controlling selected parameters of the battery system (1).

7. The method according to claim 4, wherein in step d) the detection of a thermal runaway is determined by (i) BMS subroutines for calculation of a thermal runaway and/or (ii) controlling selected parameters of the battery system (1).
